# EUROPEAN PATENT APPLICATION

(11) **EP 4 762 953 A1**
(43) Date of publication of application: **24.06.2026**
(21) Application number: 24853381.2
(22) Date of filing: 26.06.2024
(51) Int. Cl.: A24F 40/40

(54) **ATOMIZATION ASSEMBLY AND AEROSOL GENERATING DEVICE**

(30) Priority: 17.08.2023 CN 202311043824
(71) Applicant: Shenzhen Smoore Technology Limited, Shenzhen, Guangdong 518102 (CN)
(72) Inventor: LI, Jinfeng, Shenzhen, Guangdong 518102 (CN); WANG, Yaqiao, Shenzhen, Guangdong 518102 (CN); ZHONG, Xiaojun, Shenzhen, Guangdong 518102 (CN); CAO, Run, Shenzhen, Guangdong 518102 (CN); XIE, Ju, Shenzhen, Guangdong 518102 (CN); DAI, Hui, Shenzhen, Guangdong 518102 (CN)
(74) Representative: Winter, Brandl - Partnerschaft mbB
(86) International application number: PCT/CN2024/101470
(87) International publication number: WO 2025/035966

(57) **Abstract**

This application discloses an atomization assembly (100) and an aerosol generating device. The aerosol generating device includes a power supply member (200) and the atomization assembly (100). The power supply member (200) is configured supply power to the atomization assembly (100). The atomization assembly (100) includes a housing (110). A liquid storage cavity (170) is formed in the housing (110). The liquid storage cavity (170) is configured to accommodate an atomizable substrate (150). An absorption member (120) is arranged in the liquid storage cavity (170). The absorption member (120) is spaced apart from the atomizable substrate (150). The absorption member (120) is configured to absorb oxygen or nitrogen from air inside the liquid storage cavity (170). In this application, even if significant air pressure fluctuations occur inside the liquid storage cavity (170), the absorption member (120) can absorb the components of the air inside the liquid storage cavity (170), to reduce the air pressure inside the liquid storage cavity (170), thereby reducing e-liquid leakage.

## Description

This application claims priority to Chinese Patent Application No. 202311043824.2, filed with the China National Intellectual Property Administration on August 17, 2023 and entitled "ATOMIZATION ASSEMBLY AND AEROSOL GENERATING DEVICE", which is incorporated herein by reference in its entirety.

### TECHNICAL FIELD

This application relates to the field of aerosol generating technologies, and specifically, to an atomization assembly and an aerosol generating device.

### BACKGROUND

The statements herein only provide background information related to this application, and do not necessarily constitute the related art. An atomization assembly generally features a liquid storage cavity. While structural hermetic performance is ensured, the liquid storage cavity generally includes two air inlet channels, i.e., a porous atomization core and a vent channel. When e-liquid injection into the liquid storage cavity is completed, a specific negative pressure is usually generated in the liquid storage cavity through absorption of an atomizable substrate by the atomization core to retain the atomizable substrate, or the atomizable substrate that leaks from the liquid storage cavity into the vent channel is stored by the vent channel. However, when significant air pressure fluctuations occur inside the liquid storage cavity due to temperature changes, a relatively large positive pressure difference is generated between the liquid storage cavity and the vent channel. The positive pressure difference may force out the atomizable substrate stored in the vent channel, finally causing e-liquid leakage.

### SUMMARY

### Technical Problems

An objective of embodiments of this application is to provide an atomization assembly and an aerosol generating device, to resolve a technical problem in the related art that an atomizable substrate stored in a vent channel is forced out and causes e-liquid leakage when significant air pressure fluctuations occur inside a liquid storage cavity due to temperature changes.

### Technical Solutions

The technical solutions used in the embodiments of this application are as follows:
According to a first aspect, an atomization assembly is provided, including a housing. A liquid storage cavity is formed in the housing. The liquid storage cavity is configured to accommodate an atomizable substrate. An absorption member is arranged in the liquid storage cavity. The absorption member is spaced apart from the atomizable substrate. The absorption member is configured to absorb oxygen or nitrogen from air inside the liquid storage cavity.

In an embodiment, the absorption rate of the absorption member increases as a temperature increases.

In an embodiment, the absorption member is a deoxidizer.

In an embodiment, the deoxidizer includes one or more of reduced iron powder, activated carbon, diatomaceous earth, calcium oxide, magnesium oxide, aluminum oxide, potassium oxide, calcium chloride, sodium sulfate, potassium chloride, ferrous sulfate, sodium sulfide, or copper sulfate.

In an embodiment, the absorption member is made of an active material configured to generate a solid substance through reaction with nitrogen.

In an embodiment, the absorption member is arranged on the top of the liquid storage cavity.

In an embodiment, the space between the absorption member and the atomizable substrate is defined as a gas space, and the projection of the absorption member coincides with the projection of the gas space in the axial direction of the housing.

In an embodiment, an atomization cavity in communication with the external air is further formed in the housing. A porous atomization core is arranged in the atomization cavity. The liquid storage cavity is in communication with the atomization cavity through the atomization core. The atomization assembly further includes a vent channel in communication with the liquid storage cavity. The ventilation threshold of the vent channel is lower than the ventilation threshold of the atomization core.

In an embodiment, the liquid storage cavity is arranged around the atomization cavity. The absorption member is arranged around the atomization cavity. The space between the absorption member and the atomizable substrate is defined as a gas space, and the gas space is arranged around the atomization cavity.

In an embodiment, a partition is further arranged in the liquid storage cavity. The partition is configured to separate the absorption member from the atomizable substrate. The partition is configured to allow passage of a gas and prevent passage of a liquid.

In an embodiment, the partition has a ventilate and oleophobic structure.

In an embodiment, the ventilate and oleophobic structure is formed by a plurality of thin film material layers that are stacked together. The pore size of each thin film material is set to allow an airflow channel but prevent passage of an e-liquid.

In an embodiment, the partition is supported below the absorption member.

In an embodiment, a limiting piece is formed on the inner wall of the liquid storage cavity. The partition is limited by the limiting piece.

According to a second aspect, an aerosol generating device is provided, including a power supply member and the foregoing atomization assembly. The power supply member is configured to supply power to the atomization assembly.

### Beneficial Effects:

Beneficial effects of the atomization assembly provided in the embodiments of this application are as follows: Since the absorption member is arranged inside the liquid storage cavity, the following effects can be achieved when the temperature inside the liquid storage cavity decreases. According to the equation of state of ideal gas, i.e., PV=nRT, where P represents the pressure of the ideal gas, V represents the volume of the ideal gas, n represents the amount of a gas substance, T represents the thermodynamic temperature of the ideal gas, and R represents the ideal gas constant, the temperature and the pressure are in direct proportion. When the temperature decreases, the pressure of the gas inside the liquid storage cavity decreases. Since the temperature decreases, the pressure inside the liquid storage cavity decreases to be lower than the ventilation threshold of the vent channel, the external gas enters the liquid storage cavity through the vent channel, and the gas amount of the cavity increases, that is, n increases. However, since the absorption member absorbs the oxygen or the nitrogen from the air entering the liquid storage cavity, which reduces the air amount n. This maintains the pressure inside the liquid storage cavity above the ventilation threshold of the vent channel. Therefore, ventilation is not initiated, so that the pressure inside the liquid storage cavity does not exceed the external air pressure, preventing e-liquid leakage. According to the equation of state of ideal gas, the pressure inside the liquid storage cavity increases as the temperature increases. Therefore, when the temperature inside the liquid storage cavity increases, the atomizable substrate inside the liquid storage cavity may be forced into the vent channel. However, even with the temperature increase, the absorption member still can continuously absorb the oxygen or the nitrogen from the air inside the liquid storage cavity, which can retrain the pressure increase inside the liquid storage cavity. Therefore, the atomizable substrate inside the vent channel can be drawn back into the liquid storage cavity, thereby reducing e-liquid leakage. Even if significant air pressure fluctuations occur inside the liquid storage cavity due to temperature changes, it will not force the atomizable substrate stored in the vent channel out and causes e-liquid leakage.

Beneficial effects of the aerosol generating device provided in the embodiments of this application are as follows: The design of the foregoing atomization assembly can reduce e-liquid leakage of the aerosol generating device.

### BRIEF DESCRIPTION OF THE DRAWINGS

To more clearly describe technical solutions in embodiments of this application, drawings required for the description of the embodiments or the related art are briefly described below. Clearly, the drawings in the following description show only some embodiments of this application, and a person of ordinary skill in the art may derive other drawings from these drawings without making creative efforts.
FIG. 1 is a schematic structural diagram of an aerosol generating device according an embodiment of this application.
FIG. 2 is a schematic structural diagram of an atomization assembly according to an embodiment of this application.
FIG. 3 is a schematic structural diagram of the atomization assembly without atomizable substrates according to an embodiment of this application.

In the drawings:
100. Atomization assembly; 110. Housing; 111. Gas space; 112. Atomization cavity; 120. Absorption member; 130. partition; 140. Atomization core. 150. Atomizable substrate; 160. Mouthpiece; 170. Liquid storage cavity; 200. Power supply member.

### DETAILED DESCRIPTION

To make objectives, technical solutions, and advantages of this application clearer, this application is described below in further detail with reference to drawings and embodiments. It should be understood that, specific embodiments described herein are merely used for explaining this application, and are not intended to limit this application.

It should be noted that when a component is referred to as being "fixed to" or "arranged on" another component, the component may be directly on the another component or indirectly on the another component. When a component is referred to as being "connected to" another component, the component may be directly connected to the another component. An orientation or position relationship indicated by the terms such as "upper", "lower", "left", and "right" is based on an orientation or position relationship shown in the drawings, and is merely for ease of description, rather than indicating or implying that the indicated device or element needs to have a specific orientation or be constructed and operated in the specific orientation, and therefore cannot be understood as a limitation on this application. A person of ordinary skill in the art may understand specific meanings of the foregoing terms according to specific situations. The terms "first" and "second" are merely used for description, and cannot be understood as indicating or implying relative importance or implicitly indicating a quantity of technical features. Unless otherwise explicitly and specifically specified, "a plurality of" means two or more.

To describe the technical solutions provided in this application, detailed descriptions are provided below with reference to specific drawings and embodiments.

While structural hermetic performance is ensured, a liquid storage cavity 170 generally includes two air inlet channels, i.e., a porous atomization core and a vent channel. When e-liquid injection into the liquid storage cavity 170 is completed, a specific negative pressure is usually generated in the liquid storage cavity 170 through absorption of an atomizable substrate by the atomization core to retain the atomizable substrate, or the atomizable substrate that leaks from the liquid storage cavity 170 into the vent channel is stored by the vent channel. However, when significant air pressure fluctuations occur inside the liquid storage cavity 170 due to temperature changes, a relatively large positive pressure difference is generated between the liquid storage cavity 170 and the vent channel. The positive pressure difference may force out the atomizable substrate stored in the vent channel, finally causing e-liquid leakage.

To resolve the foregoing problem, the inventors of this application conducted intense research for a long time, and finally provides an atomization assembly 100 and an aerosol generating device. An absorption member 120 is arranged in the housing 110. The absorption member 120 absorbs oxygen or nitrogen from air inside the liquid storage cavity 170, so as to reduce an air pressure inside the liquid storage cavity 170, thereby alleviating e-liquid leakage.

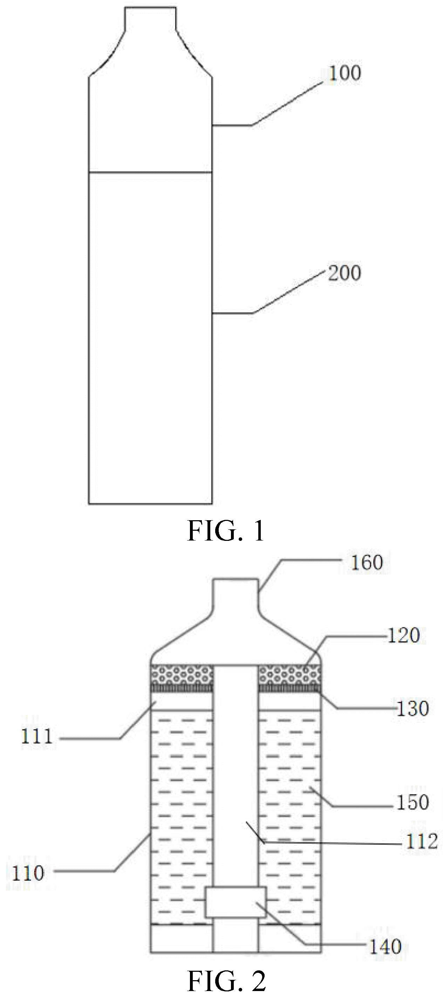

Referring to FIG. 1, an embodiment of this application provides an aerosol generating device, including a power supply member 200 and an atomization assembly 100. The power supply member 200 is mechanically and electrically connected to the atomization assembly 100. The power supply member 200 is configured to supply power to the atomization assembly 100. The atomization assembly 100 is configured to atomize an atomizable substrate 150 into aerosol particles.

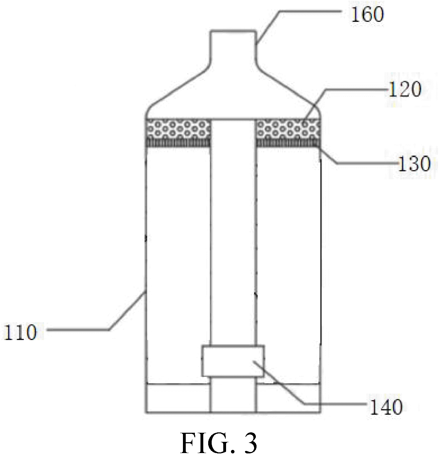

Referring to FIG. 2 and FIG. 3, the atomization assembly 100 includes a housing 110. A liquid storage cavity 170 is formed in the housing 110. The liquid storage cavity 170 is configured to accommodate an atomizable substrate 150. An absorption member 120 is arranged in the liquid storage cavity 170. The absorption member 120 is spaced apart from the atomizable substrate 150. The absorption member 120 is configured to absorb oxygen or nitrogen from air inside the liquid storage cavity 170.

The atomizable substrate 150 is a flowing e-liquid.

Since the absorption member 120 is spaced apart from the atomizable substrate 150, after the atomizable substrate 150 is injected into the liquid storage cavity 170, a space is left between the absorption member 120 and the atomizable substrate 150, which is defined as a gas space 111 in FIG. 2.

After the atomizable substrate 150 is injected into the liquid storage cavity 170, the atomizable substrate 150 in the liquid storage cavity 170 is mixed with air, and the gas space 111 is filled with air. The absorption member 120 absorbs the air from the atomizable substrate 150 and absorbs oxygen or nitrogen from the air in the gas space 111.

Air is composed of nitrogen, oxygen, rare gases (helium, neon, argon, krypton, xenon, and radon), carbon dioxide, and other substances (such as water vapor and impurities). The volume fraction of the nitrogen is about 78%, the volume fraction of the oxygen is about 21%, the volume fraction of the rare gases (helium, neon, argon, krypton, xenon, and radon) is 0.934%, the volume fraction of the carbon dioxide is 0.04%, and the volume fraction of the other substances (such as water vapor and impurities) is about 0.002%. The oxygen or the nitrogen is absorbed from the air inside the liquid storage cavity 170 through the absorption member 120. According to the law of partial pressure, the partial pressure generated by a gas in a gas mixture is equal to the pressure generated when the gas occupies an entire container alone, while the total pressure of the gas mixture is equal to the sum of the partial pressures of all gases of the gas mixture. Therefore, when the oxygen or the nitrogen is absorbed from the air, the pressure of the air decreases, thereby reducing e-liquid leakage.

When significant air pressure fluctuations may occur inside the liquid storage cavity 170 due to temperature changes, specifically, when the temperature inside the liquid storage cavity 170 may decrease, the following effects can be achieved. According to the equation of state of ideal gas, i.e., PV=nRT, where P represents the pressure of an ideal gas, V represents the volume of the ideal gas, n represents the amount of a gas substance, T represents the thermodynamic temperature of the ideal gas, and R represents the ideal gas constant, the temperature and the pressure are in direct proportion. When the temperature decreases by 1°C, the pressure of the gas inside the liquid storage cavity 170 decreases by 338 Pa. Since the temperature decreases, the pressure inside the liquid storage cavity 170 decreases to be lower than the ventilation threshold of the vent channel, the external gas enters the liquid storage cavity 170 through the vent channel, and the gas amount of the cavity increases, that is, n increases. However, since the absorption member 120 absorbs the oxygen or the nitrogen from the air entering the liquid storage cavity 170, which reduces the air amount n. This maintains the pressure inside the liquid storage cavity 170 above the ventilation threshold of the vent channel. Therefore, ventilation is not initiated, so that the pressure inside the liquid storage cavity 170 does not exceed the external air pressure, preventing e-liquid leakage. According to the equation of state of ideal gas, the pressure inside the liquid storage cavity 170 increases as the temperature increases. Therefore, when the temperature inside the liquid storage cavity 170 increases, the atomizable substrate 150 inside the liquid storage cavity 170 may be forced into the vent channel. However, even with the temperature increase, the absorption member 120 still can continuously absorb the oxygen or the nitrogen from the air inside the liquid storage cavity 170, which can restrain the pressure increase inside the liquid storage cavity 170. Therefore, the atomizable substrate 150 inside the vent channel can be drawn back into the liquid storage cavity 170, thereby reducing e-liquid leakage. In addition, the atomization assembly 100 is applicable to atomizable substrates 150 of a wide range of viscosities from low viscosity to high viscosity.

It should be noted that, the ventilation threshold refers to the point at which, when the difference between the external air pressure and the air pressure inside the liquid storage cavity 170 reaches the threshold, the corresponding channel will initiate ventilation.

During actual application, the atomization assembly 100 is prone to e-liquid leakage in the following three situations: 1: idle periods (including day and night); 2: large-volume puffing, and 3: temperature shocks during transportation. The effects before and after the absorption member is used for each of these three situations are analyzed and compared below.
1. Use of the absorption member 120 to resolve the problem of e-liquid leakage during idle periods: Due to the day-night temperature difference, when the temperature decreases at the night, the pressure inside the liquid storage cavity 170 decreases to be lower than the ventilation threshold of the vent channel. Therefore, the external gas enters the liquid storage cavity 170 through the vent channel, increasing the gas amount inside the cavity, that is, increasing n, and causing the pressure inside the liquid storage cavity 170 to increase. During the day, as both the gas amount inside the cavity and the temperature increase, the pressure inside the liquid storage cavity 170 further increases, even exceeding the external air pressure, which leads to e-liquid leakage. However, since the absorption member 120 in this embodiment of this application is used, even if the pressure inside the liquid storage cavity 170 decreases to be lower than the ventilation threshold, causing gas to enter the liquid storage cavity through the vent channel when the temperature decreases at the night, the absorption member 120 absorbs the components of the air entering the liquid storage cavity 170, that is, reduces the gas amount n. This maintains the pressure inside the liquid storage cavity 170 above the ventilation threshold while preventing the pressure inside the liquid storage cavity 170 from exceeding the external air pressure, thereby preventing e-liquid leakage. During the day, even though the temperature increases, because the absorption member 120 controls the amount of the gas entering the liquid storage cavity 170 overnight while continuing to operate under the temperature increase, the pressure increase inside the liquid storage cavity 170 is retrained, thereby preventing e-liquid leakage during idle periods.
2. Use of the absorption member 120 to resolve the problem of e-liquid leakage during large-volume puffing: During long-time puffing, the temperature inside the liquid storage cavity 170 increases due to thermal conduction. In addition, in the later stages of puffing, since the gas amount inside the liquid storage cavity 170 increases as a result of the earlier ventilation, causing the pressure inside the liquid storage cavity 170 to increase even higher than the external air pressure, e-liquid leakage occurs during the puffing. However, since the absorption member 120 is used, the components of the air entering the liquid storage cavity 170 during the earlier ventilation can be absorbed, thereby reducing the gas amount inside the liquid storage cavity 170. This increases the initial negative pressure in the later stages of puffing. Even though the puffing causes the temperature inside the liquid storage cavity 170 to increase, the combined effect of the enhanced initial negative pressure and the continuous operation of the absorption member 120 can prevent leakage of e-liquid from the liquid storage cavity 170 during the puffing.
3. Use of the absorption member 120 to resolve the problem of e-liquid leakage as a result of temperature shocks during transportation: This relies on the same principle as the solution for the e-liquid leakage during idle periods (including day and night). Since the absorption member 120 is used, even if the pressure inside the liquid storage cavity 170 decreases to be lower than the ventilation threshold, causing gas to enter the liquid storage cavity through the vent channel when the temperature decreases, the absorption member 120 absorbs the components of the air entering the liquid storage cavity 170, that is, reduces the gas amount n. This maintains the pressure inside the liquid storage cavity 170 above the ventilation threshold. Even though the temperature increases, because the absorption member 120 controls the amount of the gas entering the liquid storage cavity 170 at low temperatures while continuing to operate under the temperature increase, the pressure increase inside the liquid storage cavity 170 is retrained, thereby preventing e-liquid leakage.

In an embodiment, the absorption rate of the absorption member 120 increases as the temperature increases. Therefore, when the temperature inside the liquid storage cavity 170 increases, the absorption member 120 can quickly absorb the oxygen or the nitrogen from the air inside the liquid storage cavity 170, which can quickly reduce the air pressure inside the liquid storage cavity 170, thereby reducing e-liquid leakage.

In an embodiment, factors that affect absorbing the components of the air by the absorption member 120 include temperature, humidity, surface area of the absorption member 120, concentration of the components of the air, and type of the absorption member 120. Generally, a higher temperature, a higher concentration of the components of the air, and a larger surface area of the absorption member 120 in contact with the air indicate a higher rate at which the absorption member 120 absorbs the components, and a higher humidity indicates a lower rate at which the absorption member 120 absorbs the components.

In an embodiment, the absorption member 120 is configured to absorb the oxygen from the air inside the liquid storage cavity 170. Because the volume fraction of the oxygen in the air is about 21%, when the absorption member 120 completely absorbs the oxygen from the air inside the cavity, the pressure inside the liquid storage cavity 170 is reduced by 21%, which can effectively reduce e-liquid leakage of the liquid storage cavity 170.

In an embodiment, the absorption member 120 is a deoxidizer. The deoxidizer is arranged in the liquid storage cavity 170, to absorb the oxygen entering the liquid storage cavity 170, so that the liquid storage cavity 170 turns to an oxygen-free state. In this way, not only can the negative pressure difference between the pressure inside the liquid storage cavity 170 and the external air pressure be maintained at a relatively high level, which can better retain the liquid in the atomization core 140 and reduce leakage from the vent channel, but also can other concerns be resolved. Specifically, e-liquids or high-viscosity cannabis oil is prone to deterioration under temperature, light, moisture, and oxygen changes. Particularly, the active constituents in the high-viscosity cannabis oil gradually oxidize and decompose under aerobic conditions, reducing the efficacy and compromising the flavor and taste. Therefore, the deoxygenation function of the deoxidizer provides mold prevention, which can prevent deterioration of the e-liquids or high-viscosity cannabis oil during long-term storage. It may be understood that, in another embodiment of this application, the absorption member 120 may be another structure that can absorb oxygen, for example, a film or an absorption liquid that can absorb oxygen.

In an embodiment, the deoxidizer includes one or more of reduced iron powder, activated carbon, diatomaceous earth, calcium oxide, magnesium oxide, aluminum oxide, potassium oxide, calcium chloride, sodium sulfate, potassium chloride, ferrous sulfate, sodium sulfide, or copper sulfate. Each of the reduced iron powder, the activated carbon, the diatomaceous earth, the calcium oxide, the magnesium oxide, the aluminum oxide, the potassium oxide, the calcium chloride, the sodium sulfate, the potassium chloride, the ferrous sulfate, the sodium sulfide, and the copper sulfate can absorb oxygen. The deoxidizer may be made of any one of the reduced iron powder, the activated carbon, the diatomaceous earth, the calcium oxide, the magnesium oxide, the aluminum oxide, the potassium oxide, the calcium chloride, the sodium sulfate, the potassium chloride, the ferrous sulfate, the sodium sulfide, and the copper sulfate. Alternatively, the deoxidizer may be made of a combination of two or more of the reduced iron powder, the activated carbon, the diatomaceous earth, the calcium oxide, the magnesium oxide, the aluminum oxide, the potassium oxide, the calcium chloride, the sodium sulfate, the potassium chloride, the ferrous sulfate, the sodium sulfide, and the copper sulfate according to a particular ratio. This is not limited herein.

In an embodiment, factors that affect the rate at which the deoxidizer absorbs the oxygen include temperature, humidity, a concentration of the oxygen, type of the deoxidizer, surface area of contact between the deoxidizer and air, concentration of a chemical compound, and property of the compound. A higher temperature, a higher oxygen concentration, a larger surface area in contact with air, and a higher concentration of the active constituents in the deoxidizer indicate a higher reaction rate, a higher humidity indicates a slower reaction rate. In addition, different types of deoxidizers have different reaction rates due to different active constituents included in the deoxidizers.

In an embodiment, referring to FIG. 2, the absorption member 120 is arranged on the top of the liquid storage cavity 170. During fitting, the absorption member 120 may be first mounted to the top of the liquid storage cavity 170, and then the atomizable substrate 150 is injected into the liquid storage cavity 170, so as to ensure that a gas space 111 of a particular volume exists between the atomizable substrate 150 and the absorption member 120. Alternatively, the atomizable substrate 150 may be first injected into the liquid storage cavity 170, and then the absorption member 120 is mounted above the atomizable substrate 150. In this embodiment, because the atomizable substrate 150 is an e-liquid, which flows to a lower position under the effect of gravity. When the absorption member 120 is arranged on the top of the liquid storage cavity 170, sufficient e-liquids can be contained under a constant total volume of the liquid storage cavity 170, so that the space of the liquid storage cavity 170 is fully used, thereby facilitating a miniaturized design. It may be understood that, in another embodiment of this application, the absorption member 120 may be arranged on the side wall of the liquid storage cavity 170. This is not limited herein.

In an embodiment, referring to FIG. 2, the absorption member 120 is arranged directly above the gas space 111. In the axial direction of the housing 110, the projection of the absorption member 120 coincides with the projection of the gas space 111. In other words, in the axial direction of the housing 110, the absorption member 120 and the gas space 111 are arranged corresponding to each other at any position. In this way, the absorption member 120 can be sufficiently in contact with the air in the gas space 111, thereby achieving a higher oxygen absorption rate. It may be understood that in another embodiment of this application, in the axial direction of the housing 110, the projection of the absorption member 120 may further coincide with the projection of the gas space 111. For example, the projection area of the absorption member 120 is greater than or less than the projection area of the gas space 111.

In an embodiment, referring to FIG. 2, an atomization cavity 112 in communication with the external air is further formed in the housing 110. A porous atomization core 140 is arranged in the atomization cavity 112. The liquid storage cavity 170 is in communication with the atomization cavity 112 through the atomization core 140. The atomization assembly 100 further includes a vent channel in communication with the liquid storage cavity 170. The ventilation threshold of the vent channel is lower than the ventilation threshold of the atomization core 140.

It should be noted herein that, the ventilation threshold refers to the point at which, when the difference between the external air pressure and the air pressure inside the liquid storage cavity 170 reaches the threshold, the corresponding channel will initiate ventilation. For example, when the ventilation threshold of the vent channel is set to 600 Pa, and the ventilation threshold of the atomization core 140 is set to 1000 Pa. Therefore, when the difference between the external air pressure and the air pressure inside the liquid storage cavity 170 reaches 600 Pa, the liquid storage cavity 170 may perform ventilation through the vent channel. The external air may enter the liquid storage cavity 170 through the vent channel, to enhance the mobility of the e-liquid inside the liquid storage cavity 170. However, in this case, the atomization core 140 does not perform ventilation. In other words, the e-liquid in the liquid storage cavity 170 can enter the atomization core 140, but the gas in the atomization cavity 112 cannot enter the liquid storage cavity 170 through the atomization core 140. In this embodiment of this application, since the ventilation threshold of the vent channel is set to be less than the ventilation threshold of the atomization core 140, the liquid storage cavity 170 primarily relies on the vent channel for ventilation. This reduces a need for a dual role of the atomization core 140 in both atomization and ventilation, thereby preventing problems of degraded tastes and a reduced service life as a result of dry heating.

In addition, the ventilation threshold of the vent channel needs to be further selected based on a liquid supply status of the atomization core 140. When the atomization core 140 has a strong liquid supply capability, which means that the atomization core 140 supplies liquids smoothly, the ventilation threshold of the vent channel may be designed to be higher. When the atomization core 140 has a weak liquid supply capability, which means that the atomization core 140 does not supply liquids smoothly, the ventilation threshold of the vent channel may be designed to be lower. In other words, a vent channel of a different ventilation threshold needs to be designed for a different atomization core 140.

The liquid supply capability of the atomization core 140 is generally related to the inner diameter, the length, and the number of channels in the atomization core 140. The ventilation threshold of the vent channel is related to the length and the inner diameter of the vent channel.

In addition, the ventilation threshold design for the vent channel further needs to ensure that the negative pressure in the liquid storage cavity 170 after the ventilation is sufficient to counteract the gravity of the e-liquid in the liquid storage cavity 170, thereby preventing e-liquid leakage. After the ventilation of the liquid storage cavity 170, positive pressure may be generated in the liquid storage cavity 170 at a high temperature. In this case, the e-liquid in the liquid storage cavity 170 may leak from the vent channel. Therefore, the vent channel needs to be long enough, to prevent the e-liquid from leaking from the vent channel, thereby ensuring that the e-liquid can be drawn back into the liquid storage cavity 170 when the pressure in the liquid storage cavity 170 is restored.

In an embodiment, one end of the vent channel is in communication with the liquid storage cavity 170, and an other end of the vent channel is in communication with the atomization cavity 112. In other words, ventilation is implemented through conduction of the gas in the atomization cavity 112 to the liquid storage cavity 170. In another embodiment, one end of the vent channel is in communication with the liquid storage cavity 170, and the other end of the vent channel is in communication with the external air. Ventilation is implemented through direct introduction of the external air into the liquid storage cavity 170.

In an embodiment, referring to FIG. 2, the liquid storage cavity 170 is arranged around the atomization cavity 112, the absorption member 120 is arranged around the atomization cavity 112, and the gas space 111 is arranged around the atomization cavity 112.

In an embodiment, the atomization core 140 is electrically connected to the power supply member 200. The e-liquid in the liquid storage cavity 170 flows through the atomization core 140, and the atomization core 140 heats and atomizes the e-liquid into aerosol particles.

In an embodiment, referring to FIG. 2, a mouthpiece 160 is connected to the housing 110. The mouthpiece 160 is in communication with the atomization cavity 112.

In an embodiment, the amount of the deoxidizer is related to the amount of to-be-absorbed oxygen. 2.2 g of deoxidizer can absorb 240 ml of oxygen. The weight of the deoxidizer and the amount of the absorbed oxygen exhibit a linear relationship, as expressed by the formula of 240 ml/2.2 g*0.1 g=10.9 ml of oxygen. In addition, the amount of the used deoxidizer is related to the amount of the injected atomizable substrate. For example, if 2 ml of atomizable substrate is injected, 0.02 g of deoxidizer is theoretically required. Certainly, a specific amount of excess deoxidizer may be properly added to expedite the deoxygenation process. In this application, in the liquid storage cavity 170, the negative pressure that meets design requirements can be achieved through the match between the weight of the deoxidizer and the space of the liquid storage cavity 170. This design can avoid the complex design and calculation of the direct-liquid structure, making the design simpler and the costs lower.

In an embodiment, referring to FIG. 2, a partition 130 is further arranged in the liquid storage cavity 170. The partition 130 is configured to isolate the absorption member 120 from the atomizable substrate 150. The partition 130 allows passage of a gas, and can prevent passage of a liquid. The air inside the gas space 111 can pass through the partition 130 and be partially absorbed by the absorption member 120. The e-liquid in the liquid storage cavity 170 is blocked by the partition 130, thereby preventing the e-liquid from increasing the humidity of the absorption member 120 and preventing the e-liquid from affecting the absorption capability of the absorption member 120.

In an embodiment, the partition 130 is a ventilate and oleophobic structure. The gas may pass through the ventilate and oleophobic structure, but the e-liquid cannot pass through the ventilate and oleophobic structure. Specifically, the ventilate and oleophobic structure may be formed by a plurality of thin film material layers that are stacked together. The pore size of the material is designed to allow only passage of an airflow while preventing passage of an e-liquid. In addition, an oleophobic layer needs to be further applied to the surface of the ventilate and oleophobic structure, to reduce accumulation of e-liquids on the surface of the ventilate and oleophobic structure.

In an embodiment, referring to FIG. 2, the partition 130 is arranged below the absorption member 120. The absorption member 120 is isolated from the atomizable substrate 150 through the partition 130.

In an embodiment, referring to FIG. 2, the partition 130 is supported below the absorption member 120. The absorption member 120 may be supported through the partition 130. It may be understood that, in another embodiment, the partition 130 is arranged below the absorption member 120, but the absorption member 120 is not supported on the partition 130.

In an embodiment, a limiting piece is formed on the inner wall of the liquid storage cavity 170. The partition 130 is limited by the limiting piece, to implement mounting of the absorption member 120 and the partition 130. Specifically, the limiting piece may be supported below the partition 130 to prevent downward movement of the partition 130. Alternatively, the limiting piece may be a limiting protrusion. The limiting protrusion is engaged with a limiting groove of the partition 130 to limit the partition 130.

In another embodiment of this application, the absorption member 120 is configured to absorb the oxygen and a rare gas from the air inside the liquid storage cavity 170. Because the volume fraction of the oxygen in the air is about 21%, and the volume fraction of the rare gas is 0.934%, when the absorption member 120 completely absorbs the oxygen and the rare gas from the air inside the cavity, the pressure inside the liquid storage cavity 170 is reduced by 21.934%, which can effectively reduce e-liquid leakage of the liquid storage cavity 170.

In still another embodiment of this application, the absorption member 120 is configured to absorb the rare gas from the air inside the liquid storage cavity 170. Although the volume proportion of the rare gas is relatively small, the pressure inside the liquid storage cavity 170 can still be reduced, thereby reducing e-liquid leakage from the liquid storage cavity 170 to a specific extent.

In yet another embodiment of this application, the absorption member 120 is configured to absorb the nitrogen from the air inside the liquid storage cavity 170. Because the volume fraction of the nitrogen in the air is about 78%, when the absorption member 120 absorbs a part or an entirety of the nitrogen from the air, the pressure inside the liquid storage cavity 170 can be significantly reduced, thereby reducing e-liquid leakage of the liquid storage cavity 170.

When the absorption member 120 is configured to absorb the nitrogen, the absorption member 120 may be made of an active material that can generate a solid substance through reaction with nitrogen. The active material exists in a form of a thin film having a size of 10 micrometers or less. The active material may be selected from or be a combination of metals such as lithium, sodum, potassiudulent, bariudulent, and calciudulent. It may be understood that, in another embodiment of this application, the absorption member 120 may be any other structure that can absorb nitrogen from air. This is not limited herein.

In still yet another embodiment of this application, the absorption member 120 is configured to absorb the nitrogen and a rare gas from the air inside the liquid storage cavity 170.

The following experiment is conducted to compare the performance of the atomization assembly 100 in the embodiments of this application before and after the use of the absorption member 120. A verification group with an absorption member and a verification group with no absorption member are respectively arranged, each are provided with two housings 110. The verification group with an absorption member and the verification group with no absorption member are left idle overnight at the same time after being injected with a large amount of atomizable substrate, and are observed at the same time during the day. The verification group with no absorption member showed e-liquid leakage during idle periods, while the verification group with an absorption member did not show any e-liquid leakage during idle periods. Then, both verification groups were subjected to the same number of consecutive puffs simultaneously. Both verification groups produced a meniscus during puffing (that is, some e-liquids entered the vent channel, causing the e-liquid level in the liquid storage cavity 170 to drop). However, during idle periods shortly after the puffs ended, the verification group with no absorption member was unable to draw the meniscus back, while the verification group with an absorption member was able to completely draw the leaked e-liquid back into the liquid storage cavity 170.

The foregoing descriptions are merely optional embodiments of this application, and are not intended to limit this application. For a person skilled in the art, various modifications and variations may be made to this application. Any modification, equivalent replacement, improvement, or the like made within the spirit and principle of this application shall fall within the scope of the claims of this application.

## Claims

1. An atomization assembly, comprising a housing, wherein a liquid storage cavity is formed in the housing, the liquid storage cavity is configured to accommodate an atomizable substrate, an absorption member is arranged in the liquid storage cavity, the absorption member is spaced apart from the atomizable substrate, and the absorption member is configured to absorb oxygen or nitrogen from air inside the liquid storage cavity.

2. The atomization assembly of claim 1, wherein the absorption rate of the absorption member increases as a temperature increases.

3. The atomization assembly of claim 1, wherein the absorption member is a deoxidizer.

4. The atomization assembly of claim 3, wherein the deoxidizer comprises one or more of reduced iron powder, activated carbon, diatomaceous earth, calcium oxide, magnesium oxide, aluminum oxide, potassium oxide, calcium chloride, sodium sulfate, potassium chloride, ferrous sulfate, sodium sulfide, or copper sulfate.

5. The atomization assembly of claim 1, wherein the absorption member is made of an active material configured to generate a solid substance through reaction with nitrogen.

6. The atomization assembly of claim 1, wherein the absorption member is arranged on the top of the liquid storage cavity.

7. The atomization assembly of claim 1, wherein the space between the absorption member and the atomizable substrate is defined as a gas space, and the projection of the absorption member coincides with the projection of the gas space in the axial direction of the housing.

8. The atomization assembly of any one of claims 1 to 7, wherein an atomization cavity in communication with the external air is further formed in the housing, a porous atomization core is arranged in the atomization cavity, the liquid storage cavity is in communication with the atomization cavity through the atomization core, the atomization assembly further comprises a vent channel in communication with the liquid storage cavity, and the ventilation threshold of the vent channel is lower than the ventilation threshold of the atomization core.

9. The atomization assembly of claim 8, wherein the liquid storage cavity is arranged around the atomization cavity, the absorption member is arranged around the atomization cavity, the space between the absorption member and the atomizable substrate is defined as a gas space, and the gas space is arranged around the atomization cavity.

10. The atomization assembly of any one of claims 1 to 7, wherein a partition is further arranged in the liquid storage cavity, the partition is configured to separate the absorption member from the atomizable substrate, and the partition is configured to allow passage of a gas and prevent passage of a liquid.

11. The atomization assembly of claim 10, wherein the partition has a ventilate and oleophobic structure.

12. The atomization assembly of claim 11, wherein the ventilate and oleophobic structure is formed by a plurality of thin film material layers that are stacked together, and the pore size of each thin film material is set to allow an airflow channel but prevent passage of an e-liquid.

13. The atomization assembly of claim 10, wherein the partition is supported below the absorption member.

14. The atomization assembly of claim 10, wherein a limiting piece is formed on the inner wall of the liquid storage cavity, and the partition is limited by the limiting piece.

15. An aerosol generating device, comprising a power supply member and the atomization assembly of any one of claims 1 to 14, wherein the power supply member is configured to supply power to the atomization assembly.
